(19) Europäisches Patentamt
European Patent Office
Office européen des brevets

(11) Publication number: **0 087 451**
**B1**

(12) **EUROPEAN PATENT SPECIFICATION**

(45) Date of publication of patent specification: **30.07.86**

(51) Int. Cl.$^4$: **A 01 C 21/00**, C 05 G 3/04

(21) Application number: **82902690.5**

(22) Date of filing: **10.09.82**

(86) International application number:
**PCT/HU82/00044**

(87) International publication number:
**WO 83/00796 17.03.83 Gazette 83/07**

(54) **NUTRIENT AND/OR PLANT PROTECTING PEG WITH A PROTRACTED RELEASE OF ACTIVE INGREDIENT.**

(30) Priority: **11.09.81 HU 263481**

(43) Date of publication of application:
**07.09.83 Bulletin 83/36**

(45) Publication of the grant of the patent:
**30.07.86 Bulletin 86/31**

(84) Designated Contracting States:
**AT BE CH DE FR GB LI NL SE**

(56) References cited:
**FR-A-2 235 638**
**FR-A-2 235 638**
**GB-A-1 535 854**
**GB-A-1 535 854**
**US-A-2 931 140**
**US-A-2 931 140**
**US-A-3 458 303**
**US-A-3 458 303**
**US-A-3 502 458**

(73) Proprietor: **KÖZPONTI VALTO-ES HITELBANK RT INNOVACIOS ALAP**
**Szabadság tér 5-6**
**H-1054 Budapest (HU)**

(72) Inventor: **JAKUCS, Pál**
**Dóczy József u.5**
**H-4032 Debrecen (HU)**
Inventor: **PAPP, László**
**Kossuth u.70**
**H-4161 Báránd (HU)**
Inventor: **NYEKI, Imre**
**Kossuth u.57**
**H-4161 Báránd (HU)**
Inventor: **TOTH VARGA, Gabriella**
**Mészáros u.12**
**H-1016 Budapest (HU)**

(74) Representative: **Hansen, Bernd, Dr.rer.nat. et al**
**Hoffmann, Eitle & Partner Patentanwälte**
**Arabellastrasse 4**
**D-8000 München 81 (DE)**

**EP 0 087 451 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The subject of the invention concerns nutrient and/or plant protecting peg with protracted release of active ingredient, in particular for plants with wood-forming stems.

Protection and nutrient supply (fertilization) of plants with woody stems (trees, shrubs) are not solved in many respects. The generally used fertilizers, plant protectives and preventive materials (antidotum, "safener") of different compositions and formulations (dust, granules, etc.) are scattered to the surface of the soil. This kind of application is unfavourable in many cases since the active ingredient, in particular if it is a solid, is scattered unevenly, and an over- or underdosage may occur. Diffusion of the ingredients through the soil into the root zone depends on the given soil type, the momentary state of the soil as well as on the weather (precipitation, temperature, wind, etc.) to a great extent. In dry periods e.g. fertilizers may be scattered by the wind, in the case of an abrupt rainfall they may be washed off or away. Combined plant protectives (active ingredient + antidotum) can get into different depths. Furthermore all the above conditions may be altered in time and space by the physical and chemical properties of the soil. As a consequence, the fertilizers often do not ensure the desired effect and plant protectives are also inactive in many cases. It also occurs that the plant is damaged as well. Ineffective or partially effective utilization of the applied chemicals is not only uneconomical but often causes plant damages and pollution. Protection of the environment is of particular importance. US—A—2 931 140 discloses cartridges for fertilizers, fungicides and/or insecticides comprising a container having its lower end closed with the tapered hollow rigid nose cone made of a decomposable material and its upper end closed with a rigid driving head made of a decomposable material. The moisture in the ground enters said openings and withdraws the contents of the cartridge by means of osmotic pressure. The cartridge may be coated with shellac or another harmless material to give the same the proper degree of stiffness and rigidity for driving into the ground under the blows of a hammer.

Furthermore, it is known from US—A—3 458 303 to coat a solid fertilizer with a wax like a paraffine wax.

The present invention comprises a plant nutrient and/or plant protecting peg with a protracted release of active ingredient, particularly for plants with wood-forming stems, comprising a closed hollow body made of a cellulose-containing substance and within the hollow body of at least one plant nutrient and/or preventive material and/or plant protective as active ingredient in solid or solidified form and is characterized in that the cellulose-containing hollow body is unperforated coated inside and/or outside and/or impregnated with paraffine and the peg is a strong pressed hollow body.

Since the peg is strong it can be easily be driven into the soil, if necessary after a preliminary hole making.

Either only the outside or also the inside of the peg is coated with paraffine. The length and the diameter of the peg are not critical factors and they are always chosen depending on the efficiency of the applied active ingredients and the variety of the plant to be treated. The length of the peg is preferably 10—30 cm, its diameter is preferably 1—3 cm. In the preferred embodiment of the peg according to the invention the bottom end thereof is peaked in order to facilitate driving of the peg into the soil. If the soil is extremely hard or gritty, it is advisable to make a hole before the peg is driven in.

The active ingredient(s) placed into the hollow body are preferably in bulk, solid form, however, any agriculturally applicable adhesive binding agent may be applied to solidify the active ingredient.

The active ingredient mentioned above is in particular a fertilizer, but may be any other preventive material (antidotum) generally used in the agrochemistry, furthermore a plant protective exerting its effect through the root system, may be applied. The pegs containing plant protective(s) in their hollows are especially useful when the plant to be cultivated should otherwise be sprayed more times.

Best Mode of Carrying out the Invention

According to a preferred embodiment of the invention the hollow body is a pressed tube made of book stock, which contains fertilizer (nutrient composition:

$$N:P_2O_5:K_2O = 20:10:10)$$

in bulk form in its hollow. The fertilizer may be admixed with other nutrients and/or microelements.

The paraffine coating of the peg is an essential feature of the invention. The fact that the peg is impregnated with paraffine ensures that the nutrients release only through the pores formed by the decomposing microorganisms of the soil, then nutrients are transferred in the soil by underground waters to the rootlets of the plants.

After being driven in the soil, as a consequence of the above described perforation, the melt in the tube is dissolved and in this way a nutrient or active ingredient reservoir is formed, from which the components release in a protracted manner in time, depending upon the weather conditions, the temperature of the soil, and the moisture content and microbial activity of the soil. As the peg contains no plastic or other non-assimilable materials, it is effective for 6—12 months and after having released the active ingredients the peg itself also decomposes increasing thereby the humus content of the soil. On the other hand, as there is no residue, it protects the environment.

The pegs are driven into the soil under the edge of the foliage of trees or shrubs (e.g. grape). This

is the preferred placing of the pegs because said zone is the rootlet one where the nutrients are absorbed most intensively. The peak of the peg is preferably in a depth of 30—35 cm in the soil.

In case a peg is applied, the treated plant does not get hurt, while if the plant is treated with a fertilizer in the usual manner, the roots may be "burnt" by overfertilization or by a dose of fertilizer applied too quickly. The nutrients and ingredients releasing slowly and the other structural parts of the peg do not change the pH and the structure of the soil.

The peg according to the invention may be applied particularly preferably for the treating of town park plants or trees or shrubs by the roads, e.g. for treating the plants in streets or squares covered mostly with concrete, which plants are grown in a soil with a small uncovered surface, furthermore the peg can be applied to different fruit-trees or grape where it can be driven into the soil mechanically in a simple way. The pegs may be used extremely effectively by afforestation in cases where the fertilization of young trees is not possible and the weed and underwood control also leads to damages.

**Claim**

Plant nutrient and/or plant protecting peg with a protracted release of active ingredient, particularly for plants with wood-forming stems, comprising a closed hollow body made of a cellulose-containing substance and within the hollow body at least one plant nutrient and/or preventive material and/or plant protective as active ingredient in solid or solidified form, characterized in that the cellulose-containing hollow body is unperforated and coated inside and/or outside and/or impregnated with paraffine and the peg is a strong pressed hollow body.

**Patentanspruch**

Pflanzennährstoff und/oder Pflanzenschutzstoff enthaltender Pflock mit einer verzögerten Freigabe der aktiven Bestandteile, insbesondere für Pflanzen mit holzbildenden Stämmen, umfassend einen geschlossenen Hohlkörper aus einer Cellulose enthaltenden Substanz, und wobei sich innerhalb des Hohlkörpers wenigstens ein Pflanzennährstoff und/oder vorbeugendes Material und/oder Pflanzenschutzstoff als aktive Bestandteile in fester oder verfestigter Form befinden, dadurch gekennzeichnet, dass der cellulosehaltige Hohlkörper unperforiert ist und an der Innenseite und/oder an der Aussenseite mit Paraffin beschichtet oder imprägniert ist und dass der Pflock ein fester verpresster Hohlkörper ist.

**Revendication**

Piquet de nutrition et/ou de protection de plante avec libération prolongée d'ingrédients actifs, en particulier pour des plantes comportant des tiges formant du bois, comprenant un corps creux fermé constitué d'une substance contenant de la cellulose et, à l'intérieur du corps creux, au moins une matière de nutrition et/ou de prévention de plante et/ou une substance de protection de plante comme ingrédient actif sous une forme solide ou solidifiée, caractérisé en ce que le corps creux contenant de la cellulose n'est pas perforé et est revêtu intérieurement et/ou extérieurement et/ou imprégné de paraffine, et le piquet est un corps creux comprimé robuste.